Europäisches Patentamt

European Patent Office

Office européen des brevets

(11) Veröffentlichungsnummer: **0 456 900 A2**

(12) # EUROPÄISCHE PATENTANMELDUNG

(21) Anmeldenummer: 90123924.4

(51) Int. Cl.⁵: **A01B 59/048**, A01D 34/66

(22) Anmeldetag: **12.12.90**

(30) Priorität: 27.04.90 DE 4013591

(43) Veröffentlichungstag der Anmeldung:
21.11.91 Patentblatt 91/47

(84) Benannte Vertragsstaaten:
AT CH DE ES FR IT LI NL SE

(71) Anmelder: **Alois Pöttinger Maschinenfabrik GmbH**

**A-4710 Grieskirchen(AT)**

(72) Erfinder: **Lehner, Josef, Dipl.-Ing.**

**A-4732 St. Thomas Nr. 12(AT)**

(74) Vertreter: **Dupal, Helmut, Dipl-Ing.**
**Jägerweg 12**
**A-4702 Wallern(AT)**

(54) **Landwirtschaftliche Maschine.**

(57) Landwirtschaftliche Maschine mit einem Trommelmähwerk 4 , das an einem Tragrahmen 1 mit zwei seitlichen Parallelogrammlenkern 6,6' und mittig mit einem an einem Querbalken 8 des Tragrahmens 1 an Scharniergelenken 10,10' angelenkten Hauptlenker 7 gezogen angehängt ist und dessen Aushub-höhe mit einem hydraulischen Verstellzylinder 16 zwischen dem Hauptlenker 7 und dem Querbalken 8 einstellbar ist. Für den Anbau an das Fronthubwerk eines Schleppers ist an dem Tragrahmen 1 ein Anbaurahmen 27 angeschweißt, der eine Anbaukoppel 26 für das Hubwerk aufweist.

Fig. 1

EP 0 456 900 A2

Rank Xerox (UK) Business Services

Die Erfindung bezieht sich auf eine landwirtschaftliche Maschine mit einem Tragrahmen mit den Merkmalen des Gattungsbegriffes des Anspruches 1.

Maschinen dieser Art sind zumeist mit einem Mähwerk versehen, das den Bodenunebenheiten möglichst trägheitslos folgen soll, um keine ungemähten Stellen zu hinterlassen, oder Störungen durch Beschädigen oder Abtragen der Grasnabe oder durch Einrammen in den Boden zu verursachen. Es ist dabei wichtig, daß der Maschinenrahmen nicht nur Auf-und Abbewegungen ausführen, sondern auch Schräglagen dabei einnehmen kann.

Aus der DE-OS 26 52 736 ist eine Mähmaschine für den Frontanbau an Schlepper bekannt geworden, bei der an den Enden der Schenkel eines in Arbeitsrichtung offenen Tragrahmens, der mit einer Befestigungsvorrichtung für den Anbau versehen ist, im wesentlichen übereinander und gegen die Arbeitsrichtung nach hinten gerichtet angeordnete Prallelogrammlenker angelenkt sind, deren andere Enden beiderseits am Rahmen eines Balkenmähwerkes angelenkt sind.

Die Gelenke sind dabei als Kugelgelenke ausgeführt, mit Ausnahme eines oberen Gelenkes eines vorderen Hauptlenkers,das als scharnierendes Gelenk ausgeführt ist. Die Kugelgelenke ermöglichen eine bessere Bewegungsanpassung, während das scharnierende Gelenk eine genügende Steifigkeit der Anlenkung erhält, damit der Mähwerksrahmen in Seitenrichtung geführt ist.

Nachteilig bei dieser Anordnung ist neben dem nach vorne offenen U-förmigen Tragrahmen, dessen Schenkel auf Biegung belastet sind, so daß die Aufhängung der Arbeitsmaschine nicht steif genug ist, daß das scharnierende Gelenk durch die einseitige Anordnung besonders starken Belastungen ausgesetzt ist, während eine beidseitige Anordnung die Beweglichkeit der Aufhängung einschränken würde.

Aus dem DE-GM 89 06 546 ist eine ähnliche Anordnung zu entnehmen, ebenfalls mit einem U-förmigen Tragrahmen mit beidseitig angeordneten Parallelogrammlenkern, die an dem Rahmen eines Trommelmähwerkes angelenkt sind und zwischen deren diagonalen Anlenkstellen jeweils ein hydraulischer Hubzylinder mit Federrückstellung angeordnet ist und wobei die Enden der Schenkel des Tragrahmens schräg nach unten gezogen sind, um Raum für den Mähwerksrahmen zu erhalten. Durch die nach außen verlegten Aufhängungen soll die Pendelneigung des Mähwerkes vermindert und die Führung verbessert werden, die aber zwangsläufig die schon vorher beschriebenen Nachteile aufweist.

Aus der DE-P 30 22 742 ist schließlich eine Maschine entnehmbar, bei der ein Scheibenmähwerk an einem Tragrahmen an gegen die Arbeitsrichtung ausgerichteten Parallelogrammlenkern unter Zuhilfenahme eines Zwischenrahmens aufgehängt ist, der in Arbeitsrichtung mit einem nach vorne auskragenden Verbindungsträger versteift ist, wodurch der Tragrahmen selbst die stabile Führung erlaubt. Die Parallelogrammlenker sind selbstverständlich mit Kugelgelenken angelenkt, weil ansonsten die Ausweichbewegungen des Mähwerkes behindert wären. Nachteilig ist auch hier die mangelnde Seitenführung des Tragrahmens und Mähwerksrahmens bzw. Zwischenrahmens, um Seitenkräfte in den Tragrahmen einleiten zu können.

Aufgabe der Erfindung ist es bei einer landwirtschaftlichen Maschine der eingangs genannten Gattung den Tragrahmen und die Aufhängung des Maschinenrahmens so zu gestalten, daß dieser Höhenbewegungen und Schräglagen weitgehend beliebig einnehmen kann und gleichzeitig die Seitenführung des Maschinenrahmens wesentlich zu verbessern, sowie genügend Freiraum für das Ausheben des Maschinenrahmens zu verschaffen.

Diese Aufgabe wird bei einer Maschine des Gattungsbegriffes von Anspruch 1 mit den Merkmalen des kennzeichnenden Teiles gelöst.

Durch die Anordnung des Querbalkens wird der Bearbeitungsmaschinenrahmen nicht nur durch die Parallelogrammlenker gezogen geführt, sondern an einem stabilen Rahmen gezogen gehalten, wobei diese Anordnung die besonders stabile Führung des Hauptlenkers gestattet, während die zentrale Schwenklagerung an einem mittigen Kugelgelenk die Pendelbewegungen des Maschinenrahmens in günstiger Weise aufnimmt. Zusätzlich ergibt sich durch die Anwendung von nur zwei seitlichen Parallelogrammlenkern eine besonders einfache Anordnung.

Eine besonders große Führungsstabilität gegen Querkräfte wird durch die Gestaltung des Hauptlenkers mit zwei Streben mit scharnierenden Gelenken erreicht.

Die Anlenkung des Hauptlenkers an dem Maschinenrahmen mit einem Kugelgelenk ermöglicht eine freie Pendelbewegung des Maschinenrahmens bei mittiger Anlenkung, wobei die Anwendung einer mittigen Lagerungskonsole die Wahl einer geeigneten günstigen Lenkergeometrie für das Hochheben des Maschinenrahmens und seine Ausweichbewegungen an Bodenunebenheiten erlaubt.

Ein besonders einfacher Aufbau wird erreicht, wenn die mittige Lagerungskonsole für den Hauptlenker gleichzeitig als Halterung für ein Eingangsgetriebe ausgebildet ist, das vorteilhafterweise oberhalb des Maschinenrahmens angebracht ist und zusammen mit einem Zwischengetriebe den Antriebsstrang der Bearbeitungsmaschine oberhalb des Maschinenrahmens bildet.

Zum Ausheben der Bearbeitungsmaschine z.B.für den Transport ist die Anordnung des Verstellzylinders zwischen dem Hauptlenker und dem Querbalken des Tragrahmens besonders vorteilhaft, weil hier keine seitlichen Kräfte auf den Verstellzylinder wirksam werden und weil nur ein einziger Verstellzylinder zur Anwendung kommen muß.

Durch die Ausrichtung des Hauptlenkers und der beiden Parallelogrammlenker wird ein Parallelogrammgetriebe erhalten, wobei nur drei Lenker verwendet werden müssen und zusätzlich der Vorteil erzielt wird, daß der symmetrisch mittig angeordnete Hauptlenker die Führung gegen Seitenkräfte übernimmt und die Anlenkungen der seitlichen Lenker weniger Aufwand brauchen als bei Anwendung von beiderseits paarig angeordneten Lenkern.

Besonders vorteilhaft ist es, wenn die Anlenkung des mittigen Kugelgelenkes des Hauptlenkers sehr tief an dem Maschinenrahmen angeordnet ist, weil dadurch die Seitenbewegung des Maschinenrahmens bei pendelnden Schwenkbewegungen verringert wird und damit die Bearbeitungswerkzeuge in ihrer Funktion weniger beeinflußt werden.

Um die Bearbeitungsmaschine nicht mit dem vollen Gewicht auf dem Boden zu führen und um die Ausgleichsbewegungen an Bodenunebenheiten zu verbessern, ist die Anwendung einer Entlastungsfeder parallel zu den Seitenlenkern besonders vorteilhaft.

Bei Anwendung der Bearbeitungsmaschine im Frontbetrieb an einem Schlepper ist es vorteilhaft einen Anbaurahmen mit einer Anbaukoppel für das Schlepperhubwerk vorzusehen, das an dem Querbalken des Tragrahmens befestigt ist und nach oben ausweichende Anbaurahmenträger aufweist, damit der Bearbeitungsmaschinenrahmen mitsamt dem darauf angeordneten Getriebestrang in ausgehobener Stellung der Maschine Platz finden kann, wobei die Wahl der Befestigung am Querbalken des Tragrahmens besonders günstig gewählt ist.

Die Erfindung wird an Hand der Zeichnung beschrieben.

Es zeigt :

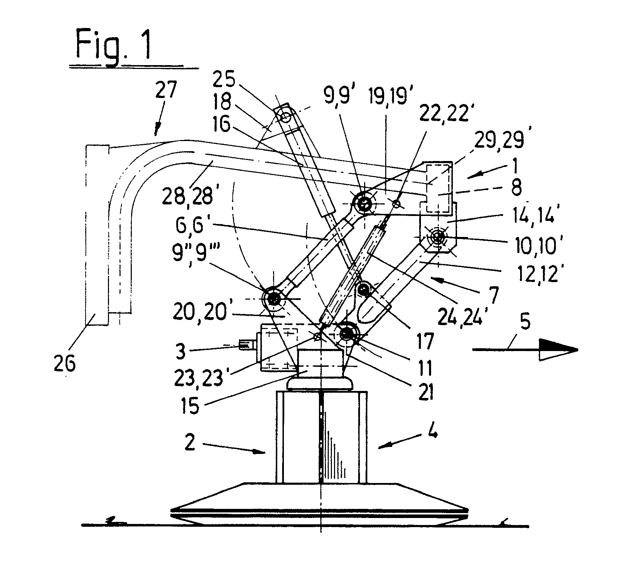

Fig. 1     die Maschine in Seitenansicht, den Anbaurahmen dünn gezeichnet und

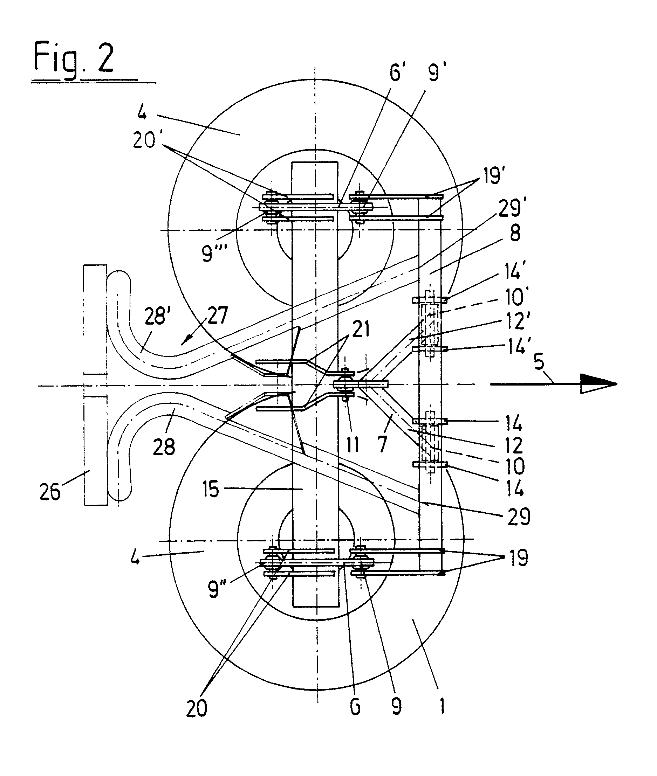

Fig. 2     eine Draufsicht auf Fig.1, ebenfalls den Anbaurahmen dünn gezeichnet.

Die landwirtschaftliche Maschine besteht aus einer Bearbeitungsmaschine 2, im vorliegenden Fall ist ein Trommelmähwerk 4 wiedergegeben, die mit dem Bearbeitungsmaschinenrahmen 15 an einem Tragrahmen 1 aufgehängt ist.

Der Tragrahmen 1 besteht aus einem Querbalken 8, der in Arbeitsrichtung 5 der Bearbeitungsmaschine 2 gesehen, hinter dem Trommelmähwerk 4 angeordnet ist und aus einem mittig am Querbalken 8 angebrachten Hauptlenker 7 und aus zwei beiderseits an den Enden des Querbalkens 8 angelenkten Parallelogrammlenkern 6,6', an denen der Bearbeitungs - maschinenrahmen 15 gezogen angelenkt ist.

Dabei ist der Hauptlenker 7 an seinem, dem Querbalken 8 zugewandten Ende in zwei Streben 12,12' aufgeteilt, die mit Scharniergelenken 10,10' symmetrisch zur Mitte 13 des Querbalkens 8 scharnierend an Lagerkonsolen 14,14' gelagert und dadurch stabil gegen den Angriff von Querkräften geführt.

Das andere Ende des Hauptlenkers 7 ist mit einem mittigen Kugelgelenk 11 versehen, das in einer mittigen Lagerungskonsole 21, die auf dem Bearbeitungsmaschinenrahmen 15 befestigt, angelenkt ist, die gleichzeitig mit ihrer Verlängerung als Halterung für ein Eingangsgetriebe 3 dient, das auf dem Bearbeitungsmaschinenrahmen 15 angebracht ist und mit einem nicht dargestellten Zwischengetriebe zur Verlagerung des Antriebs, den Antriebsstrang für das Trommelmähwerk 4 bildet ; das Trommelmähwerk 4 ist dadurch symmetrisch pendelnd gelagert, so daß weite Verschwenkwege des Bearbeitungsmaschinenrahmens 15 möglich sind.

An dem Hauptlenker 7 ist weiters ein hydraulischer Verstellzylinder 16 in einer Anlenkung 17 und andernends mit einem Lagerbolzen 25 an einer Anlenkungskonsole 18 gelenkig gelagert, die auf den Anbaurahmenträgern 28,28' eines Anbaurahmens 27 und damit mit dem Querbalken 8 des Tragrahmens 1 fest verbunden ist. Der hydraulische Verstellzylinder 16 ist dadurch von Querkräften frei gelagert.

An den äußeren Enden des Querbalkens 8 sind Anlenkungsausleger 19,19' befestigt, an denen die beiden Parallelogrammlenker 6,6' mit den Kugelgelenken 9,9' angelenkt sind, die an ihren, gegen die Arbeitsrichtung 5 ausgerichteten Enden mit den Kugelgelenken 9'',9''' an den Anlenkungsauslegern 20, 20' angelenkt sind, die ihrerseits an dem Bearbeitungs - maschinenrahmen 15 befestigt sind.

In den Anlenkungsauslegern 19,19' und 20,20' des Querbalkens 8 und des Bearbeitungsmaschinenrahmens 15 sind Bohrungen 22, 22' und 23,23' angebracht,in die Entlastungsfedern 24,24' eingehängt sind, die das Auflagegewicht des Trommelmähwerkes 4 verringern und die Ansprechempfindlichkeit für Bodenunebenheiten verbessern.

Bei Anwendung einer Bearbeitungsmaschine im Frontanbau an einem Schlepper ist, wie dünn ausgezogen dargestellt, ein Anbaurahmen 27 mit dem Tragrahmen fest verbunden.

Dieser Anbaurahmen 27 ist mit einer Anbaukoppel 26 für den Anbau an ein Hubwerk eines Schleppers versehen und besteht aus zwei nach oben, innen vorne gekrümmten Anbaurahmen - trägern 28,28', die in Arbeitsrichtung 5 an dem Querbalken 8 symmetrisch zwischen den Anlenkungsauslegern 19,19' der Parallelogrammlenker 6,6' und den Lagerkonsolen 14,14' für die Scharniergelenke 10,10' des Hauptlenkers 7 an den Verbindungsstellen 29,29' verschweißt sind; durch ihre Formgebung ermöglichen diese Anbaurahmenträger 28,28' große Pendelweiten des Bearbeitungsmaschinenrahmens 15 und eine große Aushebehöhe desselben.

Legende:

| | |
|---|---|
| 1 | Tragrahmen |
| 2 | Bearbeitungsmaschine |
| 3 | Eingangsgetriebe |
| 4 | Trommelmähwerk |
| 5 | Arbeitsrichtung der Bearbeitungsmaschine 2 |
| 6,6' | seitliche Parallelogrammlenker |
| 7 | Hauptlenker |
| 8 | Querbalken des Tragrahmens 1 |
| 9,9',9'',9''' | Kugelgelenke der Parallelogrammlenker 6,6' |
| 10,10' | Scharniergelenk des Hauptlenkers 7 |
| 11 | mittiges Kugelgelenk des Hauptlenkers 7 |
| 12,12' | Streben des Hauptlenkers 7 |
| 13 | Mitte des Querbalkens 8 |
| 14,14' | Lagerkonsolen des Hauptlenkers 7 am Querbalken 8 |
| 15 | Bearbeitungsmaschinenrahmen |
| 16 | hydraulischer Verstellzylinder |
| 17 | Anlenkung des hydraulischen Verstellzylinders 16 an dem Hauptlenker 7 |
| 18 | Anlenkungskonsole des hydraulischen Verstellzylinders 16, mit dem Querbalken 8 direkt oder indirekt verbunden |
| 19,19' | Anlenkungsausleger des Querbalkens 8 für die Parallelogrammlenker 6,6' |
| 20,20' | Anlenkungsausleger des Bearbeitungsmaschinenrahmens 15 für die Parallelogrammlenker 6,6' |
| 21 | mittige Lagerungskonsole des mittigen Kugelgelenkes 11 des Hauptlenkers 7 |
| 22,22' | Bohrungen der Anlenkungsausleger 19,19' des Querbalkens 8 |
| 23,23' | Bohrungen der Anlenkungsausleger 20,20' des Bearbeitungsmaschinenrahmens 15 |
| 24,24' | Entlastungsfeder |
| 25 | Lagerbolzen des hydraulischen Verstellzylinders 16 |
| 26 | Anbaukoppel für das Anbauhubwerk eines Schleppers |
| 27 | Anbaurahmen für den Tragrahmen 1 |
| 28,28' | Anbaurahmenträger |
| 29,29' | Verbindungsstellen der Anbaurah- |

menträger 28,28' an dem Querbalken 8

## Patentansprüche

1. Landwirtschaftliche Maschine mit einem Tragrahmen, an dem eine, von einem Schlepper her über eine Gelenkwelle und ein Eingangsgetriebe angetriebene Bearbeitungsmaschine, insbesondere ein Mähwerk und im einzelnen ein Trommelmähwerk, an Längslenkern aufgehängt ist, die vom Tragrahmen zum Bearbeitungsmaschinenrahmen gegen die Arbeitsrichutng der Bearbeitungsmaschine ausgerichtet sind und mit Kugelgelenken angelenkt ein Parallelogramm bilden, wobei ein Hauptlenker am Tragrahmen mit einem Scharniergelenk angelenkt ist, dadurch gekennzeichnet, daß der Tragrahmen (1) im wesentlichen von einem in Arbeitsrichtung (5) gesehen hinter der Bearbeitungsmaschine (2) liegenden Querbalken (8) und aus seitlichen Parallelogrammlenkern (6,6'), die mit Kugelgelenken (9,9',9'',9''') an dem Querbalken (8) und an einem Bearbeitungsmaschinenrahmen (15) angelenkt sind und aus einem Hauptlenker (7), der mit wenigstens einem, symmetrisch mittig angeordneten Scharniergelenk (10) an dem Querbalken (8) und mit einem mittigen Kugelgelenk (11) an dem Bearbeitungsmaschinenrahmen (15) angelenkt ist, gebildet wird .

2. Landwirtschaftliche Maschine nach dem vorhergehenden Anspruch, dadurch gekennzeichnet, daß der Hauptlenker (7) zum Querbalken (8) des Tragrahmens (1) hin in zwei Streben (12,12') geteilt ist, die beide an dem Querbalken (8) mit je einem Scharniergelenk (10,10') an symmetrisch zur Mitte (13) des Querbalkens (8) angebrachten Lagerkonsolen (14,14') angelenkt sind.

3. Landwirtschaftliche Maschine nach einem der vorhergehenden Ansprüche, dadurch gekennzeichnet, daß das Kugelgelenk (11) des Hauptlenkers (7) an einer am Bearbeitungsmaschinenrahmen (15) angebrachten, mittigen Lagerungskonsole (21) angelenkt ist.

4. Landwirtschaftliche Maschine nach dem vorhergehenden Anspruch, dadurch gekennzeichnet, daß die mittige Lagerungskonsole (21) des Kugelgelenkes (11) des Hauptlenkers (7) gleichzeitig als Halterung für ein Eingangsgetriebe (3) verlängert ausgebildet ist.

5. Landwirtschaftliche Maschine nach einem der vorhergehenden Ansprüche, dadurch gekennzeichnet, daß am Hauptlenker (7) eine Anlenkung (17) für einen hydraulischen Verstellzylinder (16) angebracht ist, der zwischen Hauptlenker (7) und Querbalken (8) des Tragrahmens (1) eingeschaltet und an einer Anlenkungskonsole (18) mit einem Lagerbolzen (25) angelenkt ist, die mit dem Querbalken (8) direkt oder indirekt steif verbunden ist.

6. Landwirtschaftliche Maschine nach einem der vorhergehenden Ansprüche, dadurch gekennzeichnet, daß der Hauptlenker (7) und die seitlichen Parallelogrammlenker (6,6') zusammen ein Parallelogrammgetriebe bilden, wobei der Hauptlenker (7) den unteren Lenker dieses Getriebes bildet.

7. Landwirtschaftliche Maschine nach einem der vorhergehenden Ansprüche, dadurch gekennzeichnet, daß der Hauptlenker (7) mit dem mittigen Kugelgelenk (11) möglichst tiefliegend am Bearbeitungsmaschinenrahmen (15) und mit der Anlenkstelle (26) in Arbeitsrichtung (5) gesehen hinter diesem angelenkt ist und die Parallelogrammlenker (6,6') zum Hauptlenker (7) im wesentlichten parallel ausgerichtet sind.

8. Landwirtschaftliche Maschine nach einem der vorhergehenden Ansprüche, dadurch gekennzeichnet, daß zu den Parallelogrammlenkern (6,6') parallelgeschaltete Entlastungsfedern (24,24') angeordnet sind, die beiderseits in Bohrungen (22,22' und 23, 23') an den Anlenkungsauslegern (19,19' und 20,20') des Querbalkens (8) und des Bearbeitungsmaschinenrahmens (15) eingehängt sind.

9. Landwirtschaftliche Maschine nach einem der vorhergehenden Ansprüche, dadurch gekennzeichnet, daß das Eingangsgetriebe (3) zumindest teilweise oberhalb des Bearbeitungsmaschinenrahmens (15) angeordnet ist und mit einem Zwischengetriebe für die Bearbeitungsmaschine (2),vorzugsweise einem Trommelmähwerk (4) gekuppelt ist, das auf dem Bearbeitungsmaschinenrahmen (15) angebracht ist.

10. Landwirtschaftliche Maschine mit einem Tragrahmen zum Anbau an ein Hubwerk eines Schleppers im Frontanbau, dadurch gekennzeichnet, daß der Querbalken (8) an einem Anbaurahmen (27) befestigt ist, bei dem die Anbaukoppel (26) über zwei nach oben über die Höhenlage des Querbalkens (8) hinausreichende Anbaurahmenträger (28,28') mit dem Querbalken (8) verbunden ist, deren Verbindungsstellen (29,29') etwa mittig zwischen den Lagerkonsolen (14,14') und den Anlenkungsauslegern (19,19') befestigt, vorzugsweise verschweißt, sind.

Fig. 1

## Fig. 2